# EUROPEAN PATENT APPLICATION

(11) **EP 4 518 273 A1**
(43) Date of publication of application: **05.03.2025**
(21) Application number: 23795088.6
(22) Date of filing: 17.04.2023
(51) Int. Cl.: H04L 41/12

(54) **INFORMATION INTERACTION METHOD, NETWORK DEVICE, SIGNAL RELAY NODE AND STORAGE MEDIUM**

(30) Priority: 27.04.2022 CN 202210457919
(71) Applicant: ZTE Corporation, Shenzhen, Guangdong 518057 (CN)
(72) Inventor: YE, Zhengzheng, Shenzhen, Guangdong 518057 (CN); LI, Ping, Shenzhen, Guangdong 518057 (CN)
(74) Representative: Savi, Massimiliano
(86) International application number: PCT/CN2023/088727
(87) International publication number: WO 2023/207655

(57) **Abstract**

Provided in the embodiments of the present application are an information interaction method, a network device, a signal relay node and a storage medium. The network device and a plurality of wireless relay nodes form a regional wireless signal transmission network, wherein the regional wireless signal transmission network is a multi-hop mobile communication network. The information interaction method applied to a network device comprises: performing information interaction with a wireless relay node, so as to obtain first interaction information; and according to the first interaction information, determining, constructing or maintaining topology information of a regional wireless signal transmission network.

## Description

### CROSS-REFERENCE TO RELATED APPLICATION

This application is based on and claims the priority of Chinese patent application No. 202210457919.8 filed on April 27, 2022, the disclosure of which is incorporated herein by reference in its entirety.

### TECHNICAL FIELD

Embodiments of the present disclosure relates to the field of communications technologies, and in particular to information interaction methods, a network device, a signal relay node, and a storage medium.

### BACKGROUND

In a wireless mobile communication network (such as a 2G/3G/4G/5G network), a relay device or apparatus may be added between a network device (such as a base station) and user equipment (UE) to enhance link performance. The relay device may be a reconfigurable intelligent surface (RIS) or a smart repeater (SR), etc. For example, the RIS is an artificial electromagnetic surface structure with programmable electromagnetic characteristics, which is composed of a certain number of electromagnetic units arranged in an array. By dynamically adjusting the electromagnetic properties of the electromagnetic units, intelligent reconstruction of wireless signal propagation characteristics in three-dimensional space can be achieved.

In existing technologies, only a single relay device is used in the wireless communication links. Such a scheme has limitations in terms of coverage distance and area, making it difficult to achieve comprehensive coverage enhancement and blind spot compensation. For example, due to deployment restrictions of the RIS and uncertainties posed by obstacles, it may be insufficient to rely solely on a single reflection or transmission to deliver a signal to an intended target location.

### SUMMARY

The following is a summary of the subject matters described in detail herein. This summary is not intended to limit the scope of protection of the claims.

Embodiments of the present disclosure provide information interaction methods, a network device, a signal relay node and a storage medium, which can realize effective management and interaction of multiple relay nodes through information interaction between the network device and the relay nodes, thereby facilitating comprehensive signal coverage enhancement and blind spot compensation.

In accordance with a first aspect of the present disclosure, provided is an information interaction method, which is applied to a network device. The network device, together with a plurality of wireless relay nodes, is arranged to form a regional wireless signal transmission network, and the regional wireless signal transmission network is a multi-hop mobile communication network. The method includes:
performing information interaction with a wireless relay node to obtain first interaction information; and
determining, constructing or maintaining topology information of the regional wireless signal transmission network according to the first interaction information.

In accordance with a second aspect of the present disclosure, further provided is an information interaction method, which is applied to a wireless relay node. The wireless relay node, together with a network device and at least one further wireless relay node, is arranged to form a regional wireless signal transmission network, and the regional wireless signal transmission network is a multi-hop mobile communication network. The method includes:
performing information interaction with the network device to enable the network device to determine, construct or maintain topology information of the regional wireless signal transmission network according to interaction information;
where the wireless relay node performs information interaction directly with the network device, or the wireless relay node performs information interaction with the network device through another wireless relay node.

In accordance with a third aspect of the present disclosure, further provided is an information interaction method, which is applied to a communication system. The communication system includes a regional wireless signal transmission network composed of a network device and a plurality of wireless relay nodes. The method includes:
performing, by the network device, the information interaction method of the first aspect; and
correspondingly, performing, by the wireless relay nodes, the information interaction method of the second aspect.

In accordance with a fourth aspect of the present disclosure, further provided is a network device, including: a first memory, a first processor, and a computer program stored in the first memory and executable by the first processor, where the computer program, when executed by the first processor, causes the first processor to carry out the information interaction method of the first aspect.

In accordance with a fifth aspect of the present disclosure, further provided is a wireless relay node, including: a second memory, a second processor, and a computer program stored in the second memory and executable by the processor, where the computer program, when executed by the processor, causes the processor to carry out the information interaction method of the second aspect.

In accordance with a sixth aspect of the present disclosure, further provided is a computer-readable storage medium storing computer-executable instructions, where the computer-executable instructions are configured to carry out the information interaction method of the first aspect or the second aspect.

An embodiment of the first aspect of the present disclosure provides an information interaction method, including: performing, by a network device, information interaction with a wireless relay node to obtain first interaction information; and determining, constructing or maintaining topology information of the regional wireless signal transmission network according to the first interaction information. According to the embodiment of the application, by determining, constructing or maintaining the topology information of the regional wireless signal transmission network through the information interaction between the network device and the relay node, effective management and interaction of multiple wireless relay nodes can be achieved, thereby facilitating comprehensive signal coverage enhancement and blind spot compensation.

It is to be understood that the beneficial effects of the second to sixth aspects as compared to the existing technologies are the same as those of the first aspect as compared to the existing technologies, and reference can be made to the related description about the first aspect and details will not be repeated herein.

### BRIEF DESCRIPTION OF DRAWINGS

In order to illustrate more clearly technical schemes in embodiments of the present disclosure, the accompanying drawings used to explain the embodiments or existing technologies will be briefly described below. Obviously, the accompanying drawings in the following description show only some embodiments of the present disclosure. For those of ordinary skill in the art, other drawings can be derived on the basis of these drawings without any inventive effort.
FIG. 1 is a schematic diagram of a system architecture for performing an information interaction method according to an embodiment of the present disclosure;
FIG. 2 is a schematic diagram of a system architecture for performing an information interaction method according to another embodiment of the present disclosure;
FIG. 3 is a flowchart of an information interaction method according to an embodiment of the present disclosure;
FIG. 4 is a flowchart of an information interaction method according to another embodiment of the present disclosure;
FIG. 5 is a flowchart of an information interaction method according to another embodiment of the present disclosure;
FIG. 6 is a flowchart of an information interaction method according to another embodiment of the present disclosure;
FIG. 7 is a flowchart of an information interaction method according to another embodiment of the present disclosure;
FIG. 8 is a flowchart of an information interaction method according to another embodiment of the present disclosure;
FIG. 9 is a flowchart of an information interaction method according to another embodiment of the present disclosure;
FIG. 10 is a flowchart of an information interaction method according to another embodiment of the present disclosure;
FIG. 11 is a flowchart of an information interaction method according to another embodiment of the present disclosure;
FIG. 12 is a flowchart of an information interaction method according to another embodiment of the present disclosure;
FIG. 13 is a flowchart of an information interaction method according to another embodiment of the present disclosure;
FIG. 14 is a flowchart of an information interaction method according to another embodiment of the present disclosure; and
FIG. 15 is a flowchart of an information interaction method according to another embodiment of the present disclosure.

### DETAILED DESCRIPTION

In the following description, for purposes of illustration and rather than limitation, specific details such as particular system structures, techniques and the like are set forth in order to provide a thorough understanding of embodiments of the present disclosure. However, it is to be understood by those skilled in the art that other embodiments of the present disclosure may be implemented without these specific details. In other instances, detailed description of well-known systems, apparatus, circuits, and methods may be omitted so that unnecessary details do not obscure the description of embodiments of the present disclosure.

It is to be noted that although a logical order is shown in the flowcharts, the steps shown or described may be performed, in some cases, in a different order from the order shown or described in the flowcharts. The terms such as "first" and "second" in the description, claims and above-mentioned drawings are intended to distinguish between similar objects and are not necessarily to describe a specific order or sequence.

It should also be understood that references to "one embodiment" or "some embodiments" or the like described in the description of embodiments of the present disclosure mean that particular features, structures, or characteristics described in connection with the embodiments of the present disclosure are included in one or more embodiments of the present disclosure. Thus, statements "in one embodiment," "in some embodiments," "in some other embodiments," "in some further embodiments," and the like appearing throughout this description do not necessarily all refer to the same embodiment, but mean "one or more but not all the embodiments," unless otherwise specifically emphasized. The terms "include", "comprise", "have" and variations thereof all mean "including but not limited to" unless otherwise specifically emphasized.

In a wireless mobile communication network (such as a 2G/3G/4G/5G network), a relay device or apparatus may be added between a network device (such as a base station) and user equipment (UE) to enhance link performance. The relay device may be a reconfigurable intelligent surface (RIS) or a smart repeater (SR), etc. For example, the RIS is an artificial electromagnetic surface structure with programmable electromagnetic characteristics, which is composed of a certain number of electromagnetic units arranged in an array. By dynamically adjusting the electromagnetic properties of the electromagnetic units, intelligent reconstruction of wireless signal propagation characteristics in three-dimensional space can be achieved.

In existing technologies, only a single relay device is used in the wireless communication links. Such a scheme has limitations in terms of coverage distance and area, making it difficult to achieve comprehensive coverage enhancement and blind spot compensation. For example, due to deployment restrictions of the RIS and uncertainties posed by obstacles, it may be insufficient to rely solely on a single reflection or transmission to deliver a signal to an intended target location.

On this basis, the embodiments of the present disclosure provide information interaction methods, a network device, a signal relay node and a storage medium. By determining, constructing or maintaining topology information of the regional wireless signal transmission network through the information interaction between the network device and the relay node, effective management and interaction of multiple wireless relay nodes can be achieved, thereby facilitating comprehensive signal coverage enhancement and blind spot compensation.

The embodiments of the present disclosure will be further explained below with reference to the accompanying drawings.

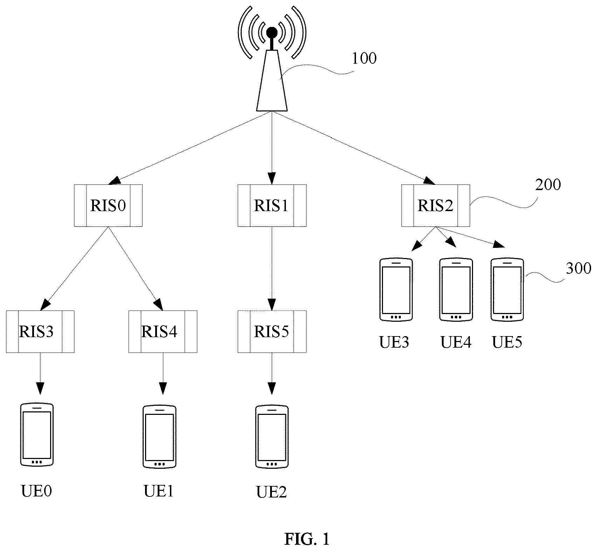

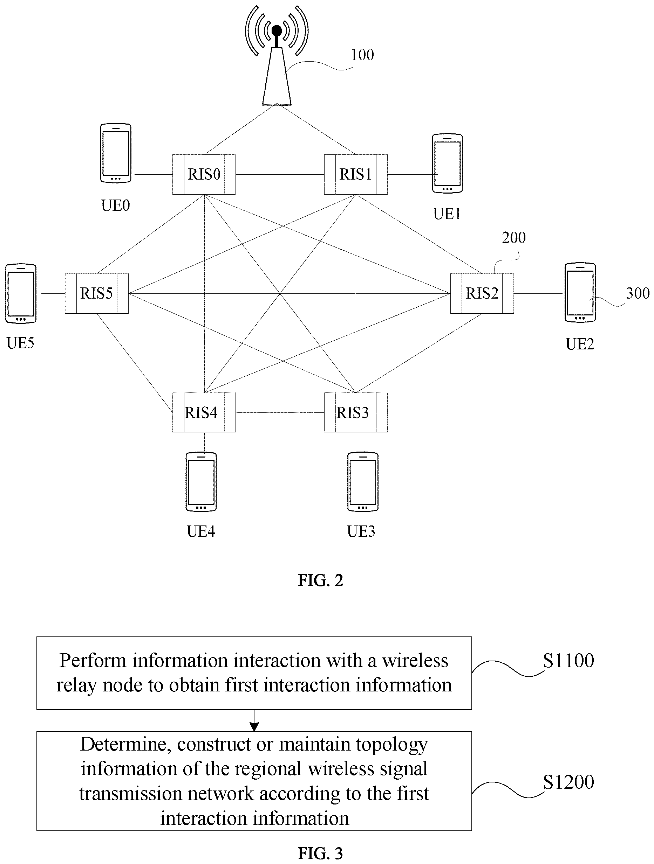

As shown, FIGS. 1 and 2 each depict a schematic diagram of a system architecture for performing an information interaction method according to an embodiment of the present disclosure. In the example of FIG. 1 or 2, the system architecture includes a network device 100, at least two wireless relay nodes 200, and at least one terminal device 300.

Herein, the network device 100 may be a device for wireless communication with a terminal device, and the network device may include a base station, a repeater, or other network-side devices having similar functionalities. The base station may be a base transceiver station (BTS) base station of a 2G mobile communication network, a NodeB (NB) base station of a 3G mobile communication network, an evolved NodeB (eNB) base station of a 4G mobile communication network, or a New Radio (NR) base station of a 5G mobile communication network, etc., which is not limited by the embodiments of the present disclosure. It is to be understood that the network device 100 is provided with a first memory and a first processor, and the information interaction method on the side of the network device 100 can be implemented by calling an information interaction program stored in the first memory and executing the information interaction program on the first processor. That is, the information interaction method according to one embodiment of the present disclosure may be executed in the first processor. The first processor may include one or more processing units, and different processing units may be separate devices, or may be integrated in one or more devices.

The wireless relay node 200 may be a reconfigurable intelligent surface (RIS) or a smart repeater (SR), etc. The wireless relay node 200 is provided with a second memory and a second processor, and an information interaction method on the side of the wireless relay node 200 can be implemented by calling an information interaction program stored on the second memory and executing the information interaction program on the second processor. That is, the information interaction method according to one embodiment of the present disclosure may be executed in the second processor. The second processor may include one or more processing units, and different processing units may be separate devices, or may be integrated in one or more devices. The wireless relay node 200 is in direct or indirect communication connection with the network device 100. For example, in a scenario where a cell within the coverage of a base station has a plurality of wireless relay nodes, some of these nodes establish direct communication connection with the base station, while others establish an indirect communication connection with the base station via other wireless relay nodes.

The terminal device 300 may be a mobile terminal device or a non-mobile terminal device. The mobile terminal device may be a mobile phone, a tablet computer, a notebook computer, a palm computer, a vehicle-mounted terminal device, a wearable device, a super mobile personal computer, a notebook, a personal digital assistant, customer premise equipment (CPE), a UFI (which is a wireless hotspot device), etc. The non-mobile terminal device may be a personal computer, a television, a teller machine or a self-service machine, etc. These are not specifically limited in the embodiments of the present disclosure. The terminal device 300 is in direct or indirect communication connection with the network device 100. For example, in a scenario where a cell within the coverage of a base station has a plurality of terminal devices, some of the terminal devices establish direct communication connection with the base station, some establish an indirect communication connection with the base station via one wireless relay node, and yet some others establish an indirect communication connection with the base station via multiple hops of wireless relay nodes.

Referring to FIG. 1, an exemplary system architecture for performing an information interaction method may be a tree topology. In the tree topology, a parent node can connect to multiple child nodes (next-hop nodes), while a child node can only connect to one parent node (previous-hop node). Each node corresponds to a node depth in the network, which indicates the minimum number of hops required to reach the node from the network device. It should be noted that the connection here refers to wireless communication connection. As shown in FIG. 1, the tree topology includes the network device 100, RIS0 to RIS5, and UE0 to UE5. Each of the RIS0 to RIS5 is a wireless relay node 200, and each of the UE0 to UE5 is a terminal device 300. The network device 100 is a root node with a node depth of 0; RIS0, RIS1, and RIS2 are child nodes of the root node and each have a node depth of 1; RIS3 and RIS4 are child nodes of RIS0 and each have a node depth of 2; and RIS5 is a child node of RIS1 and has a node depth of 2. RIS3 is in communication connection with UE0, RIS4 is in communication connection with UE1, RIS5 is in communication with UE2, and RIS2 is in communication connection with UE3, UE4, and UE5, respectively.

Referring to FIG. 2, an exemplary system architecture for performing an information interaction method may be a mesh topology. In a mesh topology, each node can be connected to one or more other nodes. It should be noted that the connection here refers to wireless communication connection. As shown in FIG. 2, the mesh topology includes the network device 100, RIS0 to RIS5, and UE0 to UE5. Each of the RIS0 to RIS5 is a wireless relay node 200, and each of the UE0 to UE5 is a terminal device 300. The network device 100 is in communication connection with RIS0 and RIS 1, and RIS0 may be in communication connection with RIS 1, RIS2, RIS3, RIS4, and RIS5, respectively; RIS1 is in communication connection with RIS0, RIS2, RIS3, RIS4, and RIS5, respectively; RIS2 is in communication connection with RIS1, RIS0, RIS3, RIS4, and RIS5, respectively; RIS3 is in communication connection with RIS1, RIS2, RIS0, RIS4, and RIS5, respectively; RIS4 is in communication connection with RIS 1, RIS2, RIS3, RIS0, and RIS5, respectively; and RIS5 is in communication connection with RIS1, RIS2, RIS3, RIS4, and RIS0, respectively. RIS0 is in communication connection with UE0, RIS1 is in communication connection with UE1, RIS2 is in communication connection with UE2, RIS3 is in communication connection with UE3, RIS4 is in communication connection with UE4, and RIS5 is in communication connection with UE5.

The system architecture and an application scenario described in the embodiment of the present disclosure are for more clearly describing the technical schemes of the embodiments of the present disclosure, and do not constitute a limitation on the technical schemes provided by the embodiments of the present disclosure. Those having ordinary skill in the art may understand that, with evolution of the system architecture and emergence of new application scenarios, the technical schemes provided by the embodiments of the present disclosure are also applicable to similar technical problems.

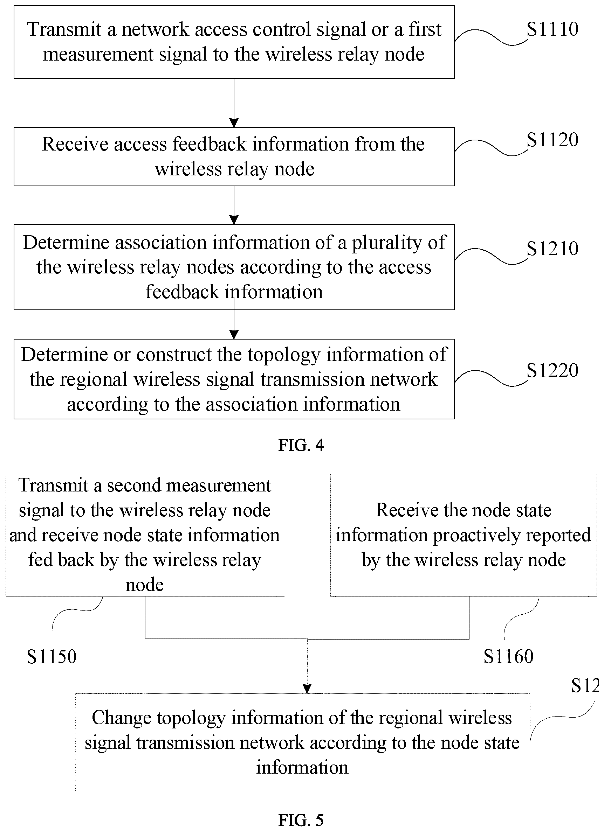

Those of ordinary skill in the art may understand that the system architectures shown in FIGS. 4 do not constitute a limitation on the embodiments of the present disclosure, and there may be more or fewer components than illustrated, or some of the components may be combined, or a different arrangement of the components may be used.

In the system architectures shown in FIGS. 4, each component can call an information interaction program stored therein to execute the information interaction method.

Based on the above system architecture, various embodiments of the information interaction method of the present disclosure are presented.

It should be noted that the system architecture can be a tree topology, a mesh topology, etc. In order to facilitate description and understanding, the tree topology is taken as an example of the system architecture for explanation mainly hereinafter. It is to be understood that in the tree topology, a previous-hop node of a wireless relay node is a parent node of the wireless relay node, and a next-hop node of the wireless relay node is a child node of the wireless relay node. The wireless relay node can be a RIS, SR, etc. In order to facilitate description and understanding, the RIS is taken as an example of the wireless relay node for explanation mainly hereinafter. The network device may be a base station, a repeater, or other network-side devices with similar functions. In order to facilitate description and understanding, the network device is taken as an example of the base station for explanation mainly hereinafter.

As shown in FIG. 3, an embodiment of one aspect of the present disclosure provides an information interaction method, which is applied to a network device, the network device, together with a plurality of wireless relay nodes, forming a regional wireless signal transmission network, and the regional wireless signal transmission network being a multi-hop mobile communication network.

The method includes, but is not limited to, the following steps S1100 to S1200.

At S1100, information interaction with a wireless relay node is performed to obtain first interaction information.

At S1200, topology information of the regional wireless signal transmission network is determined, constructed or maintained according to the first interaction information.

It is to be understood that a regional wireless signal transmission network is a cell network that can be covered by a single base station. Determining or constructing the topology information of the regional wireless signal transmission network may be the confirmation of the RIS access and relay status. For example, the RIS access and relay status confirmation may be performed to confirm the topology information of the regional wireless signal transmission network with the condition that both the base station and the RIS have a priori information (both have pre-stored a priori information); or the RIS access and relay status confirmation may be performed to construct the topology information of the regional wireless signal transmission network with the condition that the base station does not have a priori information while the RIS has a priori information; or the RIS access and relay status confirmation may be performed to construct the topology information of the regional wireless signal transmission network with the condition that the base station does not have a priori information and the RIS also does not have a priori information. The topology information of the regional wireless signal transmission network can be maintained by changing the topology information of the regional wireless signal transmission network or changing the codebook configuration or the working state of the wireless relay node in the regional wireless signal transmission network after the construction of the topology information of the regional wireless signal transmission network is completed or during the use of the regional wireless signal transmission network.

An embodiment of the first aspect of the present disclosure provides an information interaction method, including: performing, by a network device, information interaction with a wireless relay node to obtain first interaction information; and determining, constructing or maintaining topology information of the regional wireless signal transmission network according to the first interaction information. According to the embodiment of the application, by determining, constructing or maintaining the topology information of the regional wireless signal transmission network through the information interaction between the network device and the relay node, effective management and interaction of multiple wireless relay nodes can be achieved, thereby facilitating comprehensive signal coverage enhancement and blind spot compensation.

In some alternative implementations, the topology information includes, but is not limited to, at least one of:
an area index of the wireless relay node, a previous-hop node of the wireless relay node, a next-hop node of the wireless relay node, beam information corresponding to the wireless relay node, or beam information corresponding to a path leading to the wireless relay node.

It is to be understood that in the tree topology, a previous-hop node of a wireless relay node is a parent node of the wireless relay node, and a next-hop node of the wireless relay node is a child node of the wireless relay node. The beam information corresponding to the wireless relay node may include a beam index or a codebook index, etc.

In some alternative implementations, the first interaction information is access feedback information.

As shown in FIG. 4, the step S1100, where information interaction with a wireless relay node is performed to obtain first interaction information, may include, but is not limited to, the following steps S1110 to S1120.

At S1110, a network access control signal or a first measurement signal is transmitted to the wireless relay node.

At S1120, access feedback information from the wireless relay node is received.

Correspondingly, the step S1200, where topology information of the regional wireless signal transmission network is determined, constructed or maintained according to the first interaction information, may include, but is not limited to, the following steps S1210 to S1220.

At S1210, association information of a plurality of the wireless relay nodes is determined according to the access feedback information.

At S1220, the topology information of the regional wireless signal transmission network is determined or constructed according to the association information.

It is to be understood that the association information may include a previous-hop node of a wireless relay node a next-hop node of a wireless relay node, beam information, etc.

In some alternative implementations, the step S1100, where information interaction with a wireless relay node is performed to obtain first interaction information, may include, but is not limited to, the following steps S1111-S1121.

At S1111, a network access control signal is transmitted to a plurality of the wireless relay nodes through a first transmission manner.

At S1121, access feedback information from the wireless relay nodes is received through a second transmission manner, where the access feedback information is obtained by the wireless relay nodes according to pre-stored a priori information, and the a priori information includes the association information of a current wireless relay node in the regional wireless signal transmission network.

In some alternative implementations, the first transmission manner includes, but is not limited to, at least one of: a synchronization signal block (SSB) channel, a channel state information reference signal (CSI-RS) channel, media access control (MAC) signaling, radio resource control (RRC) signaling, paging signaling, or node-specific signaling.

It is to be understood that the node-specific signaling may be RIS-specific control signaling, and a mapping code table of RIS-specific control signaling may be designed to enable a unified communication protocol between the transmitting end (such as a base station) and the receiving end (such as a RIS). The RIS-specific control signaling mapping code table allows for the RIS or the base station to parse the content of the RIS-specific control signaling.

In some alternative implementations, the network access control signal includes, but is not limited to, at least one of:
a node signaling indicator for identifying the signal as the network access control signal;
a signal control type;
an index of a target wireless relay node for causing only the target wireless relay node to parse the network access control signal;
a broadcast signaling indicator for causing unspecified wireless relay nodes to parse the network access control signal;
signaling content;
current beam information for linking and information synchronization of a wireless relay node with the current beam information; and
an identifier of the regional wireless signal transmission network.

It is to be understood that, for the initial access stage, the signaling should be set as a broadcast signal indicator to ensure that all the RISs within the cell can receive and parse the signaling.

In some alternative implementations, the signal control type includes, but is not limited to, at least one of:
on/off control, beam selection control, or power control.

It is to be understood that the on/off control signal can be used to control the on/off status of the RIS; the beam selection control signal can control the beam information of RIS; and the power control signal can control the transmitted signal power of the RIS.

In some alternative implementations, the second transmission manner is a wired transmission manner or a wireless transmission manner; and
in the case where the second transmission manner is a wireless transmission manner, the second transmission manner includes, but is not limited to, at least one of: a physical uplink shared channel (PUSCH), a random access channel (RACH), MAC signaling, RRC signaling, or node-specific signaling.

In some alternative implementations, the access feedback information includes, but is not limited to, at least one of:
a node depth of a current wireless relay node in the regional wireless signal transmission network;
a count of next-hop wireless relay nodes of a current wireless relay node;
a network index or unique identifier of a next-hop wireless relay node of a current wireless relay node;
beam information of a current wireless relay node corresponding to each next-hop wireless relay node of the current wireless relay node;
a network index or unique identifier of a previous-hop wireless relay node of a current wireless relay node;
a node type of a next-hop wireless relay node of a current wireless relay node;
a node type of a previous-hop wireless relay node of a current wireless relay node;
a working state of a next-hop wireless relay node of a current wireless relay node;
a working state of a previous-hop wireless relay node of a current wireless relay node;
an activation state of a next-hop wireless relay node of a current wireless relay node;
an activation state of a previous-hop wireless relay node of a current wireless relay node;
configuration information of a next-hop wireless relay node of a current wireless relay node;
configuration information of a previous-hop wireless relay node of a current wireless relay node;
deployment information of next-hop wireless relay nodes of a current wireless relay node;
deployment information of a previous-hop wireless relay node of a current wireless relay node;
performance information of a next-hop wireless relay node of a current wireless relay node; or
performance information of a previous-hop wireless relay node of a current wireless relay node.

In some alternative implementations, the node type includes, but is not limited to, at least one of: a static codebook node, a semi-static codebook node, or a dynamic codebook node;
the working state includes, but is not limited to, at least one of: an on/off status or a beam codebook index;
the activation state includes, but is not limited to, at least one of: a reflection status or a transmission status;
the configuration information includes, but is not limited to, at least one of: horizontal and vertical element counts, a configured polarization count, a bit count, or panel area;
the deployment information includes, but is not limited to, at least one of: a deployment height, deployment coordinates, an elevation angle, an azimuth angle, or a rotation angle of panel relative to the normal; and
the performance information includes, but is not limited to, at least one of: a time interval for codebook switching, a time delay for a codebook to come into effect, or a maximum number of stored codebooks.

The following is an example of the case where the RIS access and relay status confirmation is performed to confirm the topology information of the regional wireless signal transmission network with the condition that both the base station and the RIS have a priori information (both have pre-stored a priori information).

The base station transmits a broadcast signal (a type of the network access control signal, the same below) to RIS controllers, which can be sent through a SSB channel or paging signaling or RIS-specific control signaling, and includes at least one of:
a RIS signaling indicator used for the RIS controller to analyze whether the signaling is a control signaling specifically meant for this RIS;
a type of the RIS-specific control signaling, including on/off control, beam selection control, or power control and so on;
a target RIS index of the RIS-specific control signaling to ensure that the signaling is only to be parsed by the RIS corresponding to the index, or a broadcast RIS signaling indicator to ensure that the signaling is to be received and parsed by all the RISs by default, where the signaling should be set as broadcast RIS signaling for the initial access stage;
the content of the RIS-specific control signaling, where a RIS-specific control signaling mapping code table may be designed to enable a unified communication protocol between the transmitting end and the receiving end;
a current beam ID for linking and information synchronization of a RIS with the current beam index; or
a Cell ID.

The RIS controller (i.e. the second processor of the wireless relay node, the same below) feeds back information such as its own configuration to the base station and accesses the base station. Each RIS may obtain the topology information of the node it links to during the initial deployment, or may not have access to a priori information of the topology. Herein, the case where each RIS has access to a priori information of the current network topology is taken as an example for description.

The RIS controller feeds back through RACH, RRC signaling, MAC signaling or UE capability signaling, and the transmission contents include but are not limited to one or more of:
the depth (number of layers) of the network topology where the current RIS node is located;
the number of child node RIS(s) of the current RIS;
the index or unique identification ID of child node RIS(s) of the current RIS;
the beam index or codebook index of the current RIS corresponding to each child node of the current RIS;
the index or unique identification ID of the parent node RIS of the current RIS;
the type of child and parent node RISs of the current RIS, including static, semi-static, dynamic, etc.;
the working state of child and parent node RISs of the current RIS, including on/off status, beam codebook ID, etc.;
the activation state of child and parent node RISs of the current RIS, including reflection, transmission, etc.;
the configuration information of child and parent node RISs of the current RIS, including the horizontal and vertical element counts, configured polarization count, bit count, panel area, etc.;
the deployment information of child and parent node RISs of the current RIS, including the height, deployment coordinates, elevation angle, azimuth angle, rotation angle of panel relative to the normal, etc.; or
the performance information of child and parent node RISs of the current RIS, including the time interval for codebook switching, time delay for a codebook to come into effect, maximum number of stored codebooks, etc.

The base station establishes the cell topology according to the association information between nodes, and constructs and maintains the topology table and the beam correspondence table.

In some alternative implementations, the step S1100, where information interaction with a wireless relay node is performed to obtain first interaction information, may include, but is not limited to, the following steps S1130 to S1140.

At S1130, a first measurement signal is transmitted to a plurality of the wireless relay nodes through a third transmission manner.

At S1140, the access feedback information from the wireless relay node is received through a fourth transmission manner.

Correspondingly, the step S1200, where topology information of the regional wireless signal transmission network is determined, constructed or maintained according to the first interaction information, may include, but is not limited to, the following steps S1230 to S1250.

At S1230, transmission delay information and corresponding beam information of a plurality of the wireless relay nodes are obtained according to the access feedback information.

At S1240, the association information of the plurality of the wireless relay nodes is determined according to the transmission delay information and the beam information.

At S1250, the topology information of the regional wireless signal transmission network is determined or constructed according to the association information.

In some alternative implementations, the third transmission manner includes, but is not limited to, at least one of:
an SSB channel, a CSI-RS channel, MAC signaling, RRC signaling, paging signaling, or node-specific signaling.

In some alternative implementations, the first measurement signal includes a beam index corresponding to the beam transmitted by the network device.

In some alternative implementations, the fourth transmission manner is a wired transmission manner or a wireless transmission manner; and
in the case where the fourth transmission manner is a wireless transmission manner, the fourth transmission manner includes, but is not limited to, at least one of: a PUSCH, a RACH, MAC signaling, RRC signaling, or node-specific signaling.

In some alternative implementations, the access feedback information includes, but is not limited to, at least one of:
a unique identifier or network index of a current wireless relay node;
a measured network topology-specific transmission delay or reception time; or
a beam index corresponding to a received beam transmitted by the network device.

In some alternative implementations, after determining or constructing the topology information of the regional wireless signal transmission network, the method further includes the following step.

At S1300, a node identification instruction is transmitted to a plurality of the wireless relay nodes according to the topology information to systematically index and manage corresponding wireless relay nodes.

In some alternative implementations, the node identification instruction includes but is not limited to at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

The following is an example of the case where the RIS access and relay status confirmation is performed to construct the topology information of the regional wireless signal transmission network with the condition that neither the base station nor the RIS has a priori information.

In some optional implementations, the depth of RIS nodes in the same branch chain can be determined according to the network delay. The base station transmits a measurement signal (including a beam index at the time of transmission) to directly connected RISs (RISs with node depth of 1) in turn by means of beam switching, where the measurement signal may be transmitted by SSB, CSI-RS channel, MAC signaling, RRC signaling, paging signaling, or RIS-specific signaling; and
the RIS controllers in the same chain in turn measure the time delay for signal reception and feed back the time delay information to the base station, where the feedback signaling may be sent through PUSCH channel, RACH channel, MAC signaling, RRC signaling or RIS-specific signaling, and the content of the feedback signaling includes but is not limited to at least one of:
the unique identification ID or network index of the current RIS node;
a measured network topology-specific transmission delay or reception time; or
the received corresponding beam index of the base station.

The base station identifies topological depth of multiple RISs according to the time delay reported by the RIS controllers under the same base station beam index, establishes the topology, and constructs and maintains topology table and beam correspondence table. Then, the base station sends node identification instructions to all the confirmed network nodes in turn to systematically index and manage all the RIS nodes, the node identification instruction including, but not limited to, at least one of:
a unique identification ID of the target node to be identified;
an identification index of the target node to be identified under the network topology;
an index of a parent node of the target node to be identified;
a number and index(es) of child nodes of the target node to be identified; or
beam or codebook index corresponding to each child node of the target node to be identified.

In this way, all RIS nodes in the cell are identified in the network and the topology is established.

In some alternative implementations, the first interaction information is node state information.

As shown in FIG. 5, the step S1100, where information interaction with a wireless relay node is performed to obtain first interaction information, may also include at least one of S1150 or S1160.

At S1150, a second measurement signal is transmitted to the wireless relay node and the node state information fed back by the wireless relay node is received.

Or, at S1160, the node state information proactively reported by the wireless relay node is received.

Correspondingly, the step S1200, where topology information of the regional wireless signal transmission network is determined, constructed or maintained according to the first interaction information, may further include the step of S1260.

At S1260, the topology information of the regional wireless signal transmission network is changed according to the node state information.

In some alternative implementations, the step S1150, where a second measurement signal is transmitted to the wireless relay node and the node state information fed back by the wireless relay node is received, may include at least one of S1151 or S1152.

At S1151, a measurement periodicity is obtained; the second measurement signal is transmitted to the wireless relay node according to the measurement periodicity; and the node state information fed back by the wireless relay node is received.

Or, at S1152, a topology change trigger signal is acquired; the second measurement signal is transmitted to the wireless relay node according to the topology change trigger signal; and the node state information fed back by the wireless relay node is received.

In some alternative implementations, the step S1150, where a second measurement signal is transmitted to the wireless relay node and the node state information fed back by the wireless relay node is received, may include, but is not limited to, the following steps S1153 to S1154.

At S1153, the second measurement signal is transmitted to a plurality of the wireless relay nodes through a fifth transmission manner.

At S1154, the node state information is received from the wireless relay node through a sixth transmission manner.

Correspondingly, the step S1260, where the topology information of the regional wireless signal transmission network is changed according the first interaction information, may include, but is not limited to, the following steps S1261 to S1263.

At S1261, transmission delay information and corresponding beam information of a plurality of the wireless relay nodes are obtained according to the node state information.

At S1262, the association information of the plurality of the wireless relay nodes is determined according to the transmission delay information and the beam information.

At S1263, the topology information of the regional wireless signal transmission network is changed according to the association information.

In some alternative implementations, the fifth transmission manner includes, but is not limited to, at least one of:
an SSB channel, a CSI-RS channel, MAC signaling, RRC signaling, paging signaling, or node-specific signaling.

In some alternative implementations, the second measurement signal includes a beam index corresponding to the beam transmitted by the network device.

In some alternative implementations, the sixth transmission manner is a wired transmission manner or a wireless transmission manner; and
in the case where the sixth transmission manner is a wireless transmission manner, the sixth transmission manner includes, but is not limited to, at least one of: a PUSCH, a RACH, MAC signaling, RRC signaling, or node-specific signaling.

In some alternative implementations, the node state information includes, but is not limited to, at least one of:
a unique identifier or network index of a current wireless relay node;
a measured network topology-specific transmission delay or reception time; or
a beam index corresponding to a received beam transmitted by the network device.

In some alternative implementations, the node state information includes a network exited status or a network joined status; and

Correspondingly, the step S1260, where the topology information of the regional wireless signal transmission network is changed according the first interaction information, may include, but is not limited to, the following steps S1264 to S1265.

At S1264, in response to the node state information being the network exited status, the corresponding wireless relay node is deleted from the topology information of the regional wireless signal transmission network and the topology information of the regional wireless signal transmission network is reconstructed.

At S1265, in response to the node state information being the network joined status, the corresponding wireless relay node is added to the topology information of the regional wireless signal transmission network and the topology information of the regional wireless signal transmission network is reconstructed.

In some alternative implementations, after the step S 1200, where the topology information of the regional wireless signal transmission network is changed, the method further includes the following step.

At S1400, a node identification instruction is transmitted to a plurality of the wireless relay nodes according to the changed topology information of the regional wireless signal transmission network to systematically index and manage corresponding wireless relay nodes.

In some alternative implementations, the node identification instruction includes but is not limited to at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

The following is an example of changing the topology information of the regional wireless signal transmission network after the construction of the topology information of the regional wireless signal transmission network is completed or during the use of the regional wireless signal transmission network.

In some optional implementations, there are two ways to detect the change of the network nodes or topology, one is periodic measurement initiated by the base station, and the other is proactive reporting from the changed node.

Periodic measurement reporting: The topology in the network structure is confirmed by periodical measurement signal transmitting and reporting, and the specific process is similar to the aforementioned process of performing the RIS access and relay status confirmation to construct the topology information of the regional wireless signal transmission network with the condition that neither the base station nor the RIS has a priori information. The topology measurement periodicity is configured by the network management side, or the topology measurement can be triggered by the change of topology.

Proactive reporting from the changed node: In response to power failure or abnormality occurring in a RIS, a network exited indication is automatically transmitted to the base station, or in response to a new node joining the network, network node information is reported to the base station, so that the base station side deletes/adds the node from/to a maintained topology table and sends the new topology and index to all RIS nodes in the network.

For the changed node, including the parent node and the child node(s) of the changed node, the base station sends a node identification instruction to the corresponding node to change the network topology.

In some alternative implementations, the first interaction information is operation effectiveness information.

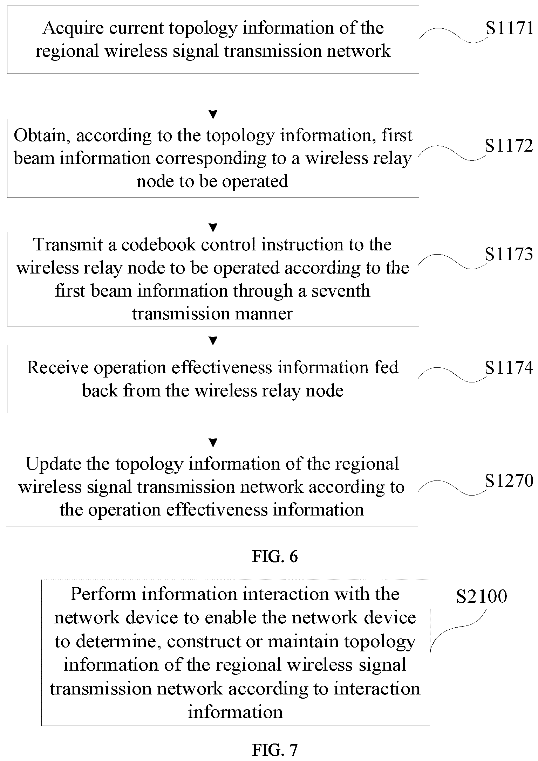

As shown in FIG. 6, the step S1100, where information interaction with a wireless relay node is performed to obtain first interaction information, may include, but is not limited to, the following steps S1171 to S1174.

At S1171, the current topology information of the regional wireless signal transmission network is acquired.

At S1172, first beam information corresponding to a wireless relay node to be operated is obtained according to the topology information.

At S1173, a codebook control instruction is transmitted to the wireless relay node to be operated according to the first beam information through a seventh transmission manner.

At S1174, operation effectiveness information fed back from the wireless relay node is received.

Correspondingly, the step S1200, where topology information of the regional wireless signal transmission network is determined, constructed or maintained according to the first interaction information, may include, but is not limited to, the following step S1270.

At S1270, the topology information of the regional wireless signal transmission network is updated according to the operation effectiveness information.

In some alternative implementations, the seventh transmission manner includes, but is not limited to, at least one of:
an SSB channel, a CSI-RS channel, MAC signaling, RRC signaling, paging signaling, or node-specific signaling.

In some alternative implementations, the codebook control instruction includes, but is not limited to, at least one of:
a network index of the wireless relay node to be operated;
an indicator that indicates whether the wireless relay node to be operated turns on beam sweeping;
beam information expected to be configured by the wireless relay node to be operated; or
an operation instruction for the wireless relay node to be operated.

In some alternative implementations, the operation instruction includes, but is not limited to, at least one of: on/off control, power control, or panel mechanics adjustment.

The following is an example of a process of changing the codebook configuration or the working state of the wireless relay node in the regional wireless signal transmission network after the construction of the topology information of the regional wireless signal transmission network is completed or during the use of the regional wireless signal transmission network.

When the base station expects to configure the codebook for a specified RIS node, it first switches to the corresponding beam according to the maintained topology table and beam correspondence table, and then sends out the codebook control signaling, which includes, but is not limited to, at least one of:
a network index of the specified node to be configured;
an indicator that indicates whether the specified node to be configured turns on beam sweeping;
an index of the beam or codebook that the specified node expects to be configured with; or
a RIS control instruction for the specified node to be configured, including on/off control, power control, panel mechanics adjustment, etc.

The codebook control signaling may be transmitted through SSB, PDCCH, PDSCH channels, MAC signaling, RRC signaling, paging signaling, or RIS-specific signaling. After receiving and effecting the signaling, the RIS controller sends acknowledgement feedback to the base station, and the feedback signaling should include the index of the current RIS node.

An embodiment of the first aspect of the present disclosure provides an information interaction method, including: performing, by a network device, information interaction with a wireless relay node to obtain first interaction information; and determining, constructing or maintaining topology information of the regional wireless signal transmission network according to the first interaction information. According to the embodiment of the application, by determining, constructing or maintaining the topology information of the regional wireless signal transmission network through the information interaction between the network device and the relay node, effective management and interaction of multiple wireless relay nodes can be achieved, thereby facilitating comprehensive signal coverage enhancement and blind spot compensation.

In addition, a further embodiment of the present disclosure provides an information interaction method, which is applied to a wireless relay node. The wireless relay node, together with a network device and at least one further wireless relay node, forms a regional wireless signal transmission network, and the regional wireless signal transmission network is a multi-hop mobile communication network.

As shown in FIG. 7, the method may include, but is not limited to, the following step S2100.

At S2100, information interaction with the network device is performed to enable the network device to determine, construct or maintain topology information of the regional wireless signal transmission network according to interaction information.

Herein, the wireless relay node performs information interaction directly with the network device, or the wireless relay node performs information interaction with the network device through another wireless relay node.

It is to be understood that the wireless relay node performing step S2100 corresponds to the network device performing steps S1110 to S1120 described above. That is, the wireless relay node performs step S2100 so that the network device correspondingly performs steps S1110 to S1120. The corresponding description above can be referred to for relevant explanations, and will not be repeated here.

In some alternative implementations, the topology information includes, but is not limited to, at least one of:
an area index of the wireless relay node, a previous-hop node of the wireless relay node, a next-hop node of the wireless relay node, beam information corresponding to the wireless relay node, or beam information corresponding to a path leading to the wireless relay node.

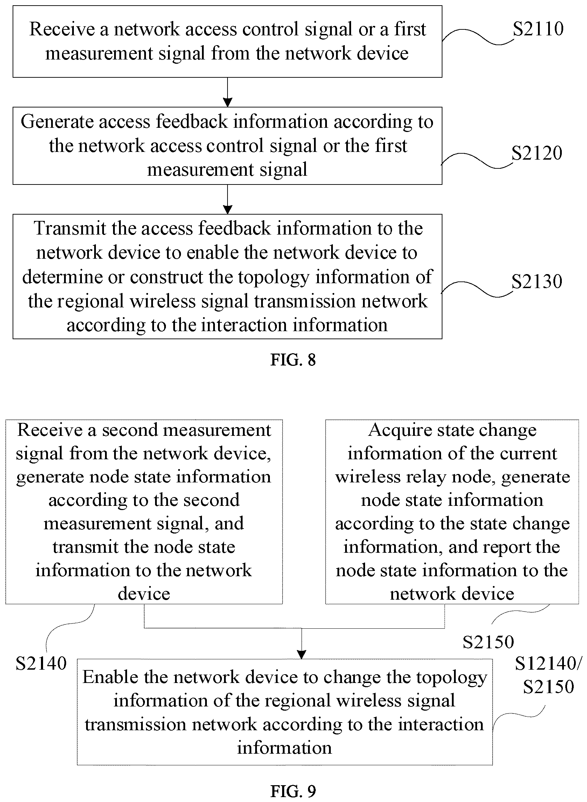

In some alternative implementations, As shown in FIG. 8, the step S2100, where information interaction with the network device is performed to enable the network device to determine, construct or maintain topology information of the regional wireless signal transmission network according to interaction information, may include, but is not limited to, the following steps S2110 to S2130.

At S2110, a network access control signal or a first measurement signal from the network device is received.

At S2120, access feedback information is generated according to the network access control signal or the first measurement signal.

At S2130, the access feedback information is transmitted to the network device to enable the network device to determine or construct the topology information of the regional wireless signal transmission network according to the interaction information.

It is to be understood that the wireless relay node performing steps S2110 to S2130 corresponds to the network device performing steps S1110 to S1120 and steps S1210 to S1220 described above. That is, the network device performs steps S1110 to S1120 and steps S1210 to S1220 so that the wireless relay node correspondingly performs steps S2110 to S2130. The corresponding description above can be referred to for relevant explanations, and will not be repeated here.

In some alternative implementations, the step S2110, where a network access control signal from the network device is received, includes the following step.

At S2111, the network access control signal from the network device is received through a first transmission manner.

The step S2120, where access feedback information is generated according to the network access control signal or the first measurement signal, includes the following steps.

At S2121, pre-stored a priori information is searched for according to the network access control signal to obtain association information of the current wireless relay node in the regional wireless signal transmission network.

At S2122, the access feedback information is generated according to the association information.

The step S2130, where the access feedback information is transmitted to the network device, includes the following step.

At S2131, the access feedback information is transmitted to the network device through a second transmission manner.

It is to be understood that the wireless relay node performing steps S2111, S2121, and S2131 corresponds to the network device performing steps S1111 and S1121 described above. That is, the network device performs steps S1111 and S1121 so that the radio relay node performs steps S2111, S2121, and S2131, respectively. The corresponding description above can be referred to for relevant explanations, and will not be repeated here.

In some alternative implementations, the first transmission manner includes, but is not limited to, at least one of: an SSB channel, a CSI-RS channel, MAC signaling, RRC signaling, paging signaling, or node-specific signaling.

In some alternative implementations, the network access control signal includes, but is not limited to, at least one of:
a node signaling indicator for identifying the signal as the network access control signal;
a signal control type;
an index of a target wireless relay node for causing only the target wireless relay node to parse the network access control signal;
a broadcast signaling indicator for causing unspecified wireless relay nodes to parse the network access control signal;
signaling content;
current beam information for linking and information synchronization of a wireless relay node with the current beam information; or
an identifier of the regional wireless signal transmission network.

In some alternative implementations, the signal control type includes, but is not limited to, at least one of:
on/off control, beam selection control, or power control.

In some alternative implementations, the second transmission manner is a wired transmission manner or a wireless transmission manner; and
in the case where the second transmission manner is a wireless transmission manner, the second transmission manner includes, but is not limited to, at least one of: a PUSCH, a RACH, MAC signaling, RRC signaling, or node-specific signaling.

In some alternative implementations, the access feedback information includes, but is not limited to, at least one of:
a node depth of a current wireless relay node in the regional wireless signal transmission network;
a count of next-hop wireless relay nodes of a current wireless relay node;
a network index or unique identifier of a next-hop wireless relay node of a current wireless relay node;
beam information of a current wireless relay node corresponding to each next-hop wireless relay node of the current wireless relay node;
a network index or unique identifier of a previous-hop wireless relay node of a current wireless relay node;
a node type of a next-hop wireless relay node of a current wireless relay node;
a node type of a previous-hop wireless relay node of a current wireless relay node;
a working state of a next-hop wireless relay node of a current wireless relay node;
a working state of a previous-hop wireless relay node of a current wireless relay node;
an activation state of a next-hop wireless relay node of a current wireless relay node;
an activation state of a previous-hop wireless relay node of a current wireless relay node;
configuration information of a next-hop wireless relay node of a current wireless relay node;
configuration information of a previous-hop wireless relay node of a current wireless relay node;
deployment information of next-hop wireless relay nodes of a current wireless relay node;
deployment information of a previous-hop wireless relay node of a current wireless relay node;
performance information of a next-hop wireless relay node of a current wireless relay node; or
performance information of a previous-hop wireless relay node of a current wireless relay node.

In some alternative implementations, the node type includes, but is not limited to, at least one of: a static codebook node, a semi-static codebook node, or a dynamic codebook node;
the working state includes, but is not limited to, at least one of: an on/off status or a beam codebook index;
the activation state includes, but is not limited to, at least one of: a reflection status or a transmission status;
the configuration information includes, but is not limited to, at least one of: horizontal and vertical element counts, a configured polarization count, a bit count, or panel area;
the deployment information includes, but is not limited to, at least one of: a deployment height, deployment coordinates, an elevation angle, an azimuth angle, or a rotation angle of panel relative to the normal; and
the performance information includes, but is not limited to, at least one of: a time interval for codebook switching, a time delay for a codebook to come into effect, or a maximum number of stored codebooks.

In some alternative implementations, the information interaction with the network device may include, but is not limited to, the following steps S2112 to S2132.

At S2112, the first measurement signal from the network device is received through a third transmission manner.

At S2122, access feedback information is generated according to the first measurement signal, where the access feedback information includes transmission delay information and beam information corresponding to the first measurement signal.

At S2132, the access feedback information is transmitted to the network device through a fourth transmission manner.

It is to be understood that the wireless relay node performing steps S2112 to S2132 corresponds to the network device performing steps S1130, S1140, S1230, S1240, and S1250 described above. That is, the network device performs steps S1130, S1140, S1230, S1240, and S1250 so that the wireless relay node correspondingly performs steps S2112 to S2132. The corresponding description above can be referred to for relevant explanations, and will not be repeated here.

In some alternative implementations, the third transmission manner includes, but is not limited to, at least one of:
an SSB channel, a CSI-RS channel, MAC signaling, RRC signaling, paging signaling, or node-specific signaling.

In some alternative implementations, the first measurement signal includes a beam index corresponding to the beam transmitted by the network device.

In some alternative implementations, the fourth transmission manner is a wired transmission manner or a wireless transmission manner; and
in the case where the fourth transmission manner is a wireless transmission manner, the fourth transmission manner includes, but is not limited to, at least one of: a PUSCH, a RACH, MAC signaling, RRC signaling, or node-specific signaling.

In some alternative implementations, the access feedback information includes, but is not limited to, at least one of:
a unique identifier or network index of a current wireless relay node;
a measured network topology-specific transmission delay or reception time; or
a beam index corresponding to a received beam transmitted by the network device.

In some alternative implementations, the method further includes:
receiving a node identification instruction from the network device, where the node identification instruction is generated by the network device according to the topology information; and
acquiring network information corresponding to the current wireless relay node according to the node identification instruction.

In some alternative implementations, the node identification instruction includes but is not limited to at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

In some alternative implementations, As shown in FIG. 9, the step S2100, where information interaction with the network device is performed to enable the network device to determine, construct or maintain topology information of the regional wireless signal transmission network according to interaction information, may include at least one of S2140 or S2150.

At S2140, a second measurement signal from the network device is received, node state information is generated according to the second measurement signal, and the node state information is transmitted to the network device, to enable the network device to change the topology information of the regional wireless signal transmission network according to the interaction information.

Or, at S2150, state change information of the current wireless relay node is acquired, node state information is generated according to the state change information, and the node state information is reported to the network device, to enable the network device to change the topology information of the regional wireless signal transmission network according to the interaction information.

It is to be understood that the wireless relay node performing step S2140 or S2150 corresponds to the network device performing steps S1150, S1160, and S1260 described above. That is, the wireless relay node correspondingly performs step S2140 or S2150 so that the network device performs steps S1150, S1160, and S1260. The corresponding description above can be referred to for relevant explanations, and will not be repeated here.

In some alternative implementations, the step S2140, where a second measurement signal from the network device is received, node state information is generated according to the second measurement signal, and the node state information is transmitted to the network device, may include, but is not limited to, the following steps S2141 to S2143.

At S2141, the second measurement signal is received from the network device through a fifth transmission manner.

At S2142, the node state information is generated according to the second measurement signal, where the node state information includes transmission delay information and beam information corresponding to the second measurement signal.

At S2143, the node state information is transmitted to the network device through a sixth transmission manner.

It is to be understood that the wireless relay node performing steps S2141 to S2143 corresponds to the network device performing steps S1153, S1154, S1261, S1262, and S1263 described above. That is, the network device performs steps S1153, S1154, S1261, S1262, and S1263 so that the wireless relay node correspondingly performs steps S2141 to S2143. The corresponding description above can be referred to for relevant explanations, and will not be repeated here.

In some alternative implementations, the fifth transmission manner includes, but is not limited to, at least one of:
an SSB channel, a CSI-RS channel, MAC signaling, RRC signaling, paging signaling, or node-specific signaling.

In some alternative implementations, the second measurement signal includes a beam index corresponding to the beam transmitted by the network device.

In some alternative implementations, the sixth transmission manner is a wired transmission manner or a wireless transmission manner; and
in the case where the sixth transmission manner is a wireless transmission manner, the sixth transmission manner includes, but is not limited to, at least one of: a PUSCH, a RACH, MAC signaling, RRC signaling, or node-specific signaling.

In some alternative implementations, the node state information includes, but is not limited to, at least one of:
a unique identifier or network index of a current wireless relay node;
a measured network topology-specific transmission delay or reception time; or
a beam index corresponding to a received beam transmitted by the network device.

In some alternative implementations, the node state information includes a network exited status or a network joined status; and
correspondingly, the changing the topology information of the regional wireless signal transmission network according to the interaction information may include, but is not limited to, the following steps S2151 to S2152.

At S2151, in response to the node state information being the network exited status, the corresponding wireless relay node is deleted from the topology information of the regional wireless signal transmission network and the topology information of the regional wireless signal transmission network is reconstructed.

At S2152, in response to the node state information being the network joined status, the corresponding wireless relay node is added to the topology information of the regional wireless signal transmission network and the topology information of the regional wireless signal transmission network is reconstructed.

It is to be understood that the wireless relay node performing steps S2151 to S2152 corresponds to the network device performing steps S1264 and S1265 described above. That is, the wireless relay node correspondingly performs steps S2151 to S2152 so that the network device correspondingly performs steps S1264 and S1265. The corresponding description above can be referred to for relevant explanations, and will not be repeated here.

In some alternative implementations, the method further includes steps S2161 and S2162.

At S2161, a node identification instruction from the network device is received, where the node identification instruction is generated by the network device according to the changed topology information.

At S2162, network information corresponding to the current wireless relay node is acquired according to the node identification instruction.

It is to be understood that the wireless relay node performing steps S2161 and S2162 corresponds to the network device performing step S1400 described above. That is, the network device performs step S1400 so that the wireless relay node correspondingly performs steps S2161 and S2162. The corresponding description above can be referred to for relevant explanations, and will not be repeated here.

In some alternative implementations, the node identification instruction includes but is not limited to at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

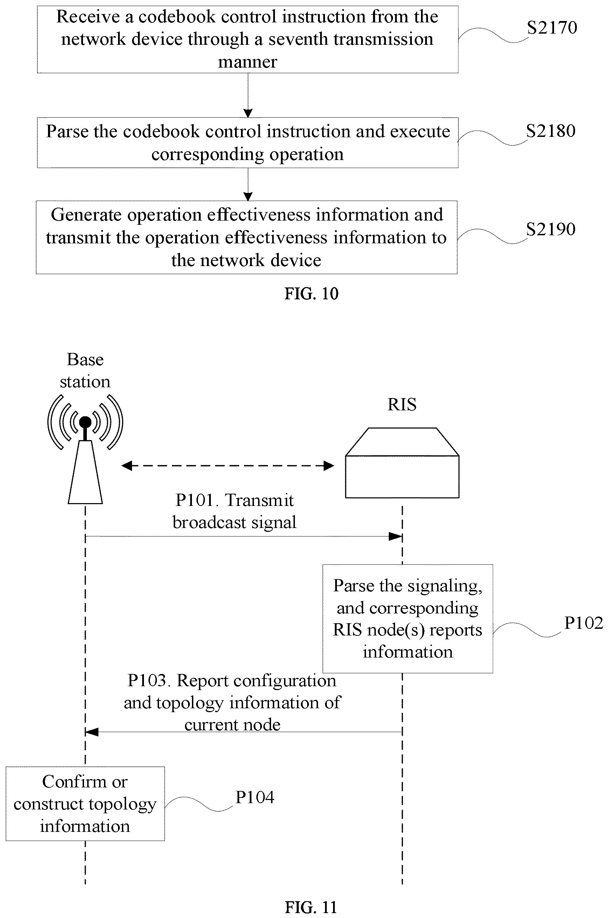

In some alternative implementations, As shown in FIG. 10, the information interaction with the network device may include, but is not limited to, the following steps S2170 to S2190.

At S2170, a codebook control instruction from the network device is received through a seventh transmission manner, where the codebook control instruction is transmitted by the network device according to the current topology information of the regional wireless signal transmission network.

At S2180, the codebook control instruction is parsed and corresponding operation is executed.

At S2190, operation effectiveness information is generated and the operation effectiveness information is transmitted to the network device.

It is to be understood that the wireless relay node performing steps S2170 to S2190 corresponds to the network device performing steps S1170 to S1174 described above. That is, the network device performs steps S1170 to S1174 so that the wireless relay node correspondingly performs steps S2170 to S2190. The corresponding description above can be referred to for relevant explanations, and will not be repeated here.

In some alternative implementations, the seventh transmission manner includes, but is not limited to, at least one of:
an SSB channel, a CSI-RS channel, MAC signaling, RRC signaling, paging signaling, or node-specific signaling.

In some alternative implementations, the codebook control instruction includes, but is not limited to, at least one of:
a network index of the wireless relay node to be operated;
an indicator that indicates whether the wireless relay node to be operated turns on beam sweeping;
beam information expected to be configured by the wireless relay node to be operated; or
an operation instruction for the wireless relay node to be operated.

In some alternative implementations, the operation instruction includes, but is not limited to, at least one of: on/off control, power control, or panel mechanics adjustment.

An embodiment of the first aspect of the present disclosure provides an information interaction method, including: performing, by a network device, information interaction with a wireless relay node to obtain first interaction information; and determining, constructing or maintaining topology information of the regional wireless signal transmission network according to the first interaction information. According to the embodiment of the application, by determining, constructing or maintaining the topology information of the regional wireless signal transmission network through the information interaction between the network device and the relay node, effective management and interaction of multiple wireless relay nodes can be achieved, thereby facilitating comprehensive signal coverage enhancement and blind spot compensation.

In addition, a further embodiment of the present disclosure provides an information interaction method, which is applied to a communication system, the communication system including a regional wireless signal transmission network composed of a network device and a plurality of wireless relay nodes, the method including:
performing, by the network device, the information interaction method as described above; and
correspondingly, performing, by the wireless relay nodes, the information interaction method as described above.

It is to be understood that the information interaction process between the network device and the plurality of wireless relay nodes is as described above. For example, the wireless relay nodes perform step S2100 so that the network device correspondingly performs steps S1110 to S1120; or, the network device performs steps S1110 to S1120 and steps S1210 to S1220 so that the wireless relay nodes correspondingly perform steps S2110 to S2130; or, the network device performs steps S1111 and S1121 so that the wireless relay nodes correspondingly perform steps S2111, S2121, and S2131; or, the network device performs steps S1130, S1140, S1230, S1240, and S1250 so that the wireless relay nodes correspondingly perform steps S2112 to S2132; or, the wireless relay nodes correspondingly perform steps S2140 or S2150 so that the network device performs steps S1150, S1160, and S1260; the network device performs steps S1153, S1154, S1261, S1262, and S1263 so that the wireless relay nodes correspondingly perform steps S2141 to S2143; or, the wireless relay nodes correspondingly perform steps S2151 to S2152 so that the network device performs steps S1264 and S1265; or, the network device performs steps S1170 to S1174 so that the wireless relay nodes correspondingly perform steps S2170 to S2190.

The information interaction method of the embodiments of the present disclosure will be further explained with five specific examples below. It should be noted that the following examples with the system architecture represented as a tree topology, the wireless relay node represented as a RIS and the network device represented as a base station are provided for illustrative purposes only.

### Example I

Example I is a RIS access and relay status confirmation process, where each RIS has a priori information about the current network topology. The process is shown in FIG. 11. In this example, an information interaction method applied to a communication system includes the following steps.

At P101, the base station transmits a broadcast signal to RIS controllers, which can be sent through a SSB channel or paging signaling or RIS-specific control signaling, and includes at least one of:
a RIS signaling indicator used for the RIS controller to analyze whether the signaling is a control signaling specifically meant for this RIS;
a type of the RIS-specific control signaling, including on/off control, beam selection control, or power control and so on;
a target RIS index of the RIS-specific control signaling to ensure that the signaling is only to be parsed by the RIS corresponding to the index, or a broadcast RIS signaling indicator to ensure that the signaling is to be received and parsed by all the RISs by default, where the signaling should be set as broadcast RIS signaling for the initial access stage;
the content of the RIS-specific control signaling, where a RIS-specific control signaling mapping code table is designed to enable a unified communication protocol between the transmitting end and the receiving end;
a current beam ID for linking and information synchronization of a RIS with the current beam index; or
a Cell ID.

At P102, the node corresponding to the index parses the signal and reports configuration information, and in the case of initial access, all nodes report their configuration information.

At P103, the RIS controller feeds back through RACH, RRC signaling, MAC signaling or UE capability signaling, and the transmission contents include but are not limited to one or more of:
the depth (number of layers) of the network topology where the current RIS node is located;
the number of child node RIS(s) of the current RIS;
the index or unique identification ID of child node RIS(s) of the current RIS;
the beam index or codebook index of the current RIS corresponding to each child node of the current RIS;
the index or unique identification ID of the parent node RIS of the current RIS;
the type of child and parent node RISs of the current RIS, including static, semi-static, dynamic, etc.;
the working state of child and parent node RISs of the current RIS, including on/off status, beam codebook ID, etc.;
the activation state of child and parent node RISs of the current RIS, including reflection, transmission, etc.;
the configuration information of child and parent node RISs of the current RIS, including the horizontal and vertical element counts, configured polarization count, bit count, panel area, etc.;
the deployment information of child and parent node RISs of the current RIS, including the height, deployment coordinates, elevation angle, azimuth angle, rotation angle of panel relative to the normal, etc.; or
the performance information of child and parent node RISs of the current RIS, including the time interval for codebook switching, time delay for a codebook to come into effect, maximum number of stored codebooks, etc.

At P104, the base station establishes the cell topology according to the association information between nodes, and constructs and maintains the topology table and the beam correspondence table.

### Example II

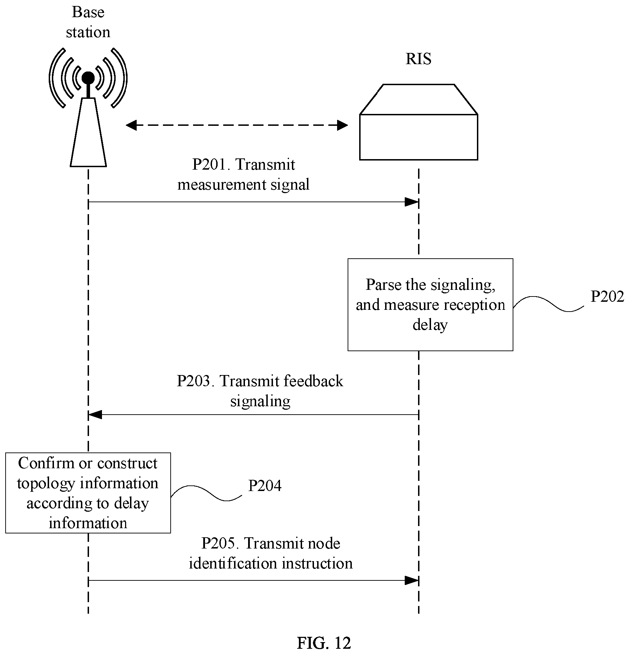

Example II is a RIS access and relay status confirmation process, where RIS nodes have no a priori information about the current network topology. The process is shown in FIG. 12. In this example, an information interaction method applied to a communication system includes the following steps.

At P201, the base station transmits a measurement signal (including a beam index at the time of transmission) to directly connected RISs (with a depth of 1 in the network topology) in turn by means of beam switching, where the measurement signal may be transmitted by SSB, CSI-RS channel, MAC signaling, RRC signaling, paging signaling, or RIS-specific signaling.

At P202, the RIS controllers in the same chain in turn measure the time delay for signal reception, and parse and record the corresponding beam index of the base station.

At P203, each RIS controller sends feedback signaling to the base station in turn, where the feedback signaling may be sent through PUSCH channel, RACH channel, MAC signaling, RRC signaling or RIS-specific signaling, and the content of the feedback signaling includes but is not limited to at least one of:
the unique identification ID or network index of the current RIS node;
a measured network topology-specific transmission delay or reception time; or
the received corresponding beam index of the base station.

At P204, the base station identifies topological depth of multiple RISs according to the time delay reported by the RIS controllers under the same base station beam index, establishes the topology, and constructs and maintains topology table and beam correspondence table.

At P205, the base station sends node identification instructions to all the confirmed network nodes in turn to systematically index and manage all the RIS nodes, the node identification instruction including, but not limited to, at least one of:
a unique identification ID of the target node to be identified;
an identification index of the target node to be identified under the network topology;
an index of a parent node of the target node to be identified;
a number and index(es) of child nodes of the target node to be identified; or
beam or codebook index corresponding to each child node of the target node to be identified.

In this way, all RIS nodes in the cell are identified in the network and the topology is established.

### Example III

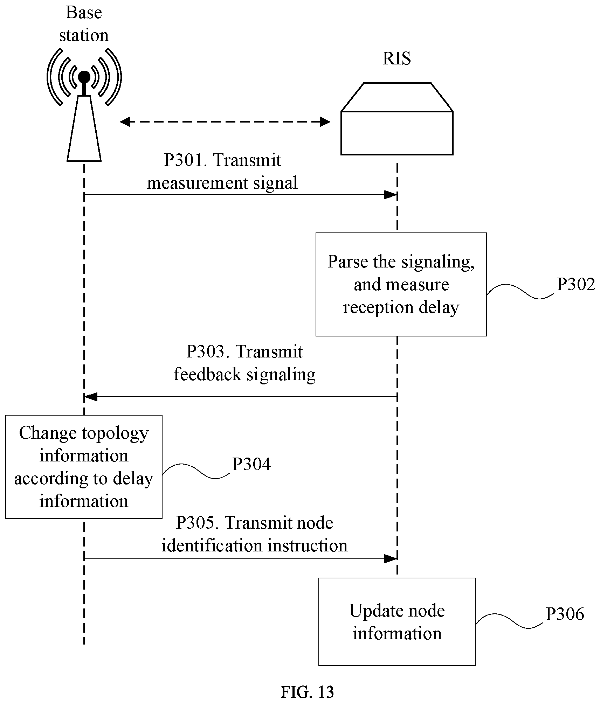

Example III is a topology change process (topology change detection and maintenance process), which adopts the periodic measurement reporting mode. The process is shown in FIG. 13. In this example, an information interaction method applied to a communication system includes the following steps.

At P301, the base station periodically transmits a topology measurement signal to confirm the topology in the network structure. The topology measurement periodicity is configured by the network management side or controlled to be triggered by topology changes. The measurement signal includes a beam index of the base station at the time of transmission. The measurement signal may be transmitted by SSB, CSI-RS channel, MAC signaling, RRC signaling, paging signaling, or RIS-specific signaling.

At P302, the RIS controllers in the same chain in turn measure the time delay for signal reception, and parse and record the corresponding beam index of the base station.

At P303, each RIS controller sends feedback signaling to the base station in turn, where the feedback signaling may be sent through PUSCH channel, RACH channel, MAC signaling, RRC signaling or RIS-specific signaling, and the content of the feedback signaling includes but is not limited to at least one of:
the unique identification ID or network index of the current RIS node;
a measured network topology-specific transmission delay or reception time; or
the received corresponding beam index of the base station.

At P304, the base station side establishes a topology according to the time delay reported by the RIS controllers under the same base station beam index; compares the topology with the original topology and beam correspondence table; and updates the topology and beam correspondence table if the topology has changed, or performs no subsequent processing if the topology has not changed.

At P305, the base station sends node identification instructions to all the confirmed network nodes in turn to systematically index and manage all the RIS nodes, the node identification instruction including, but not limited to, at least one of:
a unique identification ID of the target node to be identified;
an identification index of the target node to be identified under the network topology;
an index of a parent node of the target node to be identified;
a number and index(es) of child nodes of the target node to be identified; or
beam or codebook index corresponding to each child node of the target node to be identified.

At P306, each RIS controller updates node information according to the received node identification instruction.

### Example IV

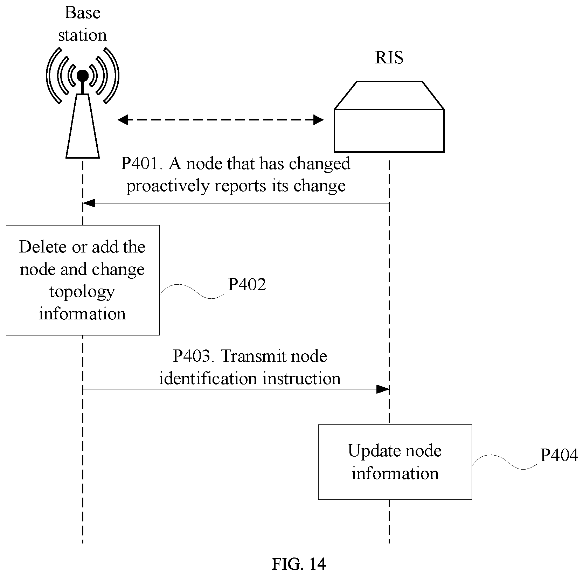

Example IV is the topology change process (topology change detection and maintenance process), which adopts the mode of proactive reporting from the changed node. The process is shown in FIG. 14. In this example, an information interaction method applied to a communication system includes the following steps.

At P401, in response to power failure or abnormality occurring in a RIS, a network exited indication is automatically transmitted to the base station, and the base station side deletes the node from a maintained topology table; or in response to a new node joining the network, network node information is reported to the base station.

At P402, the base station receives the information reported by the changed node, deletes/adds the corresponding node from/to the original topology table, and reconstructs the topology table and beam correspondence table.

At P403, the base station sends node identification instructions to the network nodes affected by the topology change and updates the RIS node indexes and the topology, the node identification instruction including, but not limited to, at least one of:
a unique identification ID of the target node to be identified;
an identification index of the target node to be identified under the network topology;
an index of a parent node of the target node to be identified;
a number and index(es) of child nodes of the target node to be identified; or
beam or codebook index corresponding to each child node of the target node to be identified.

At P404, each RIS controller updates node information according to the received node identification instruction.

### Example V

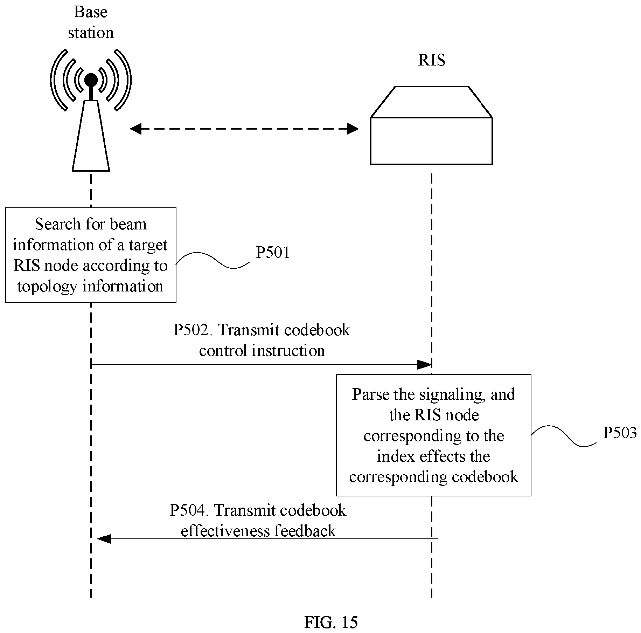

Example V is a process of a base station configuring a codebook for or transmitting signaling to a specified RIS node, as shown in FIG. 15. In this example, an information interaction method applied to a communication system includes the following steps.

At P501, the base station searches for the relay node of the target RIS node and the beam codebook index of each node according to the maintained topology table and the beam correspondence table.

At P502, the base station switches to the beam of the chain where the node is located, and sends a codebook control instruction to instruct the corresponding RIS nodes (all the relay nodes) to switch to the corresponding codebook. The signaling may be transmitted through SSB, PDCCH, PDSCH channels, MAC signaling, RRC signaling, paging signaling, or RIS-specific signaling. The content of the codebook control instruction includes, but is not limited to, at least one of:
a network index of the specified node to be configured;
an indicator that indicates whether the specified node to be configured turns on beam sweeping;
an index of the beam or codebook that the specified node expects to be configured with; or
a RIS control instruction for the specified node to be configured, including on/off control, power control, panel mechanics adjustment, etc.

At P503, the RIS controller parses the signaling, and the RIS node corresponding to the index effects the corresponding codebook.

At P504, once the codebook is effected, the RIS controller sends a codebook effectiveness feedback, including the network index of the current node.

In addition, a further embodiment of the present disclosure provides a network device, including: a first memory, a first processor, and a computer program stored in the first memory and executable by the first processor, where the computer program, when executed by the first processor, causes the first processor to implement the information interaction method described above.

As a non-transitory computer-readable storage medium, the first memory can be configured to store a non-transitory software program and a non-transitory computer-executable program. In addition, the first memory may include a high-speed random access memory and a non-transitory memory, for example, at least one magnetic disk storage device, a flash memory device, or another non-transitory solid-state storage device. In some implementations, the first memory may optionally include memories remotely located with respect to the first processor, and these remote memories may be connected to the first processor via a network. Examples of the above-mentioned network include the Internet, an intranet, a local area network, a mobile communication network, and a combination thereof.

It should be noted that the network device in this embodiment can be applied as the network device in the system architecture of the embodiment shown in FIG. 1 or 2. In addition, the network device in this embodiment can execute the information interaction method of the embodiment shown in FIG. 3. That is, the network device in this embodiment, the network device in the system architecture of the embodiment shown in FIG. 1 or 2, and the information interaction method in the embodiment shown in FIG. 3 are all of the same inventive concept, so these embodiments have the same implementation principle and technical effect, the details of which will not be repeated herein.

The non-transient software program and instructions required to implement the information interaction method of the above-described embodiments are stored in a memory, and when executed by a processor, cause the processor to perform the information interaction method of the above-described embodiment, for example, to perform the method steps in FIG. 3, 4, 5, or 6 described above.

In addition, a further embodiment of the present disclosure provides a wireless relay node, including: a second memory, a second processor, and a computer program stored in the second memory and executable by the processor, where the computer program, when executed by the processor, causes the processor to implement the information interaction method described in the claims.

As a non-transitory computer-readable storage medium, the second memory can be configured to store a non-transitory software program and a non-transitory computer-executable program. In addition, the second memory may include a high-speed random access memory and a non-transitory memory, for example, at least one magnetic disk storage device, a flash memory device, or another non-transitory solid-state storage device. In some implementations, the second memory may optionally include memories remotely located with respect to the second processor, and these remote memories may be connected to the second processor via a network. Examples of the above-mentioned network include the Internet, an intranet, a local area network, a mobile communication network, and a combination thereof.

It should be noted that the wireless relay node in this embodiment can be applied as the wireless relay node in the system architecture of the embodiment shown in FIG. 1 or 2. In addition, the wireless relay node in this embodiment can execute the information interaction method of the embodiment shown in FIG. 7. That is, the wireless relay node in this embodiment, the wireless relay node in the system architecture of the embodiment shown in FIG. 1 or 2, and the information interaction method in the embodiment shown in FIG. 7 are all of the same inventive concept, so these embodiments have the same implementation principle and technical effect, the details of which will not be repeated herein.

The non-transient software program and instructions required to implement the information interaction method of the above-described embodiments are stored in a memory, and when executed by a processor, cause the processor to perform the information interaction method of the above-described embodiment, for example, to perform the method steps in FIG. 7, 8, 9, or 10 described above.

In addition, a further embodiment of the present disclosure provides a computer-readable storage medium storing computer-executable instructions, where the computer-executable instructions are configured for implementation of the information interaction method described above.

In some embodiments, the computer-readable storage medium stores computer-executable instructions, which, when executed by a processor or a controller, for example, by the processor in the embodiments of the above-described diagnostic and analysis system 100, cause the processor or controller to perform the information interaction method in any of the above-described embodiments, e.g. to perform the method steps in FIG. 3, 4, 5, 6, 7, 8, 9, or 10.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage apparatuses, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

The above is a detailed description of some implementations of the present disclosure, but the present disclosure is not limited to the above-mentioned embodiments. Those having ordinary skill in the art can also make various equivalent modifications or replacements without departing from the essence of the present disclosure, and these equivalent modifications or replacements are all included in the scope defined by the claims of the present disclosure.

## Claims

1. An information interaction method, applied to a network device, wherein,
the network device, together with a plurality of wireless relay nodes, is arranged to form a regional wireless signal transmission network which is a multi-hop mobile communication network,
the method comprises:
performing information interaction with a wireless relay node to obtain first interaction information; and
determining, constructing or maintaining topology information of the regional wireless signal transmission network according to the first interaction information.

2. The method of claim 1, wherein the topology information comprises at least one of:
an area index of the wireless relay node, a previous-hop node of the wireless relay node, a next-hop node of the wireless relay node, beam information corresponding to the wireless relay node, or beam information corresponding to a path leading to the wireless relay node.

3. The method of claim 1 or 2, wherein, the first interaction information is access feedback information;
performing information interaction with a wireless relay node to obtain first interaction information comprises:
transmitting a network access control signal or a first measurement signal to the wireless relay node; and
receiving the access feedback information from the wireless relay node; and
correspondingly, determining, constructing or maintaining topology information of the regional wireless signal transmission network according to the first interaction information comprises:
determining association information of a plurality of the wireless relay nodes according to the access feedback information; and
determining or constructing the topology information of the regional wireless signal transmission network according to the association information.

4. The method of claim 3, wherein, performing information interaction with a wireless relay node to obtain first interaction information comprises:
transmitting a network access control signal to a plurality of the wireless relay nodes through a first transmission manner; and
receiving the access feedback information from the wireless relay nodes through a second transmission manner, wherein the access feedback information is obtained by the wireless relay nodes according to pre-stored a priori information, and the a priori information comprises the association information of a current wireless relay node in the regional wireless signal transmission network.

5. The method of claim 4, wherein,
the first transmission manner comprises at least one of: a synchronization signal block (SSB) channel, a channel state information reference signal (CSI-RS) channel, media access control (MAC) signaling, radio resource control (RRC) signaling, paging signaling, or node-specific signaling;
the network access control signal comprises at least one of:
a node signaling indicator for identifying the signal as the network access control signal;
a signal control type;
an index of a target wireless relay node for causing only the target wireless relay node to parse the network access control signal;
a broadcast signaling indicator for causing unspecified wireless relay nodes to parse the network access control signal;
signaling content;
current beam information for linking and information synchronization of a wireless relay node with the current beam information; or
an identifier of the regional wireless signal transmission network; and
the signal control type comprises at least one of: on/off control, beam selection control, or power control; and
the second transmission manner is a wired transmission manner or a wireless transmission manner;
in the case where the second transmission manner is a wireless transmission manner, the second transmission manner comprises at least one of: a physical uplink shared channel (PUSCH), a random access channel (RACH), MAC signaling, RRC signaling, or node-specific signaling;
the access feedback information comprises at least one of:
a node depth of a current wireless relay node in the regional wireless signal transmission network;
a count of next-hop wireless relay nodes of a current wireless relay node;
a network index or unique identifier of a next-hop wireless relay node of a current wireless relay node;
beam information of a current wireless relay node corresponding to each next-hop wireless relay node of the current wireless relay node;
a network index or unique identifier of a previous-hop wireless relay node of a current wireless relay node;
a node type of a next-hop wireless relay node of a current wireless relay node;
a node type of a previous-hop wireless relay node of a current wireless relay node;
a working state of a next-hop wireless relay node of a current wireless relay node;
a working state of a previous-hop wireless relay node of a current wireless relay node;
an activation state of a next-hop wireless relay node of a current wireless relay node;
an activation state of a previous-hop wireless relay node of a current wireless relay node;
configuration information of a next-hop wireless relay node of a current wireless relay node;
configuration information of a previous-hop wireless relay node of a current wireless relay node;
deployment information of next-hop wireless relay nodes of a current wireless relay node;
deployment information of a previous-hop wireless relay node of a current wireless relay node;
performance information of a next-hop wireless relay node of a current wireless relay node; or
performance information of a previous-hop wireless relay node of a current wireless relay node;
the node type comprises at least one of: a static codebook node, a semi-static codebook node, or a dynamic codebook node;
the working state comprises at least one of: an on/off status or a beam codebook index;
the activation state comprises at least one of: a reflection status or a transmission status; the configuration information comprises at least one of: horizontal and vertical element counts, a configured polarization count, a bit count, or panel area;
the deployment information comprises at least one of: a deployment height, deployment coordinates, an elevation angle, an azimuth angle, or a rotation angle of panel relative to the normal; and
the performance information comprises at least one of: a time interval for codebook switching, a time delay for a codebook to come into effect, or a maximum number of stored codebooks.

6. The method of claim 3, wherein, performing information interaction with a wireless relay node to obtain first interaction information comprises:
transmitting a first measurement signal to a plurality of the wireless relay nodes through a third transmission manner; and
receiving the access feedback information from the wireless relay node through a fourth transmission manner; and
correspondingly, the determining, constructing or maintaining topology information of the regional wireless signal transmission network according to the first interaction information comprises:
obtaining transmission delay information and corresponding beam information of a plurality of the wireless relay nodes according to the access feedback information;
determining the association information of a plurality of the wireless relay nodes according to the transmission delay information and the beam information; and
determining or constructing the topology information of the regional wireless signal transmission network according to the association information.

7. The method of claim 6, wherein, the third transmission manner comprises at least one of:
an SSB channel, a CSI-RS channel, MAC signaling, RRC signaling, paging signaling, or node-specific signaling;
the first measurement signal comprises a beam index corresponding to the beam transmitted by the network device;
the fourth transmission manner is a wired transmission manner or a wireless transmission manner;
in the case where the fourth transmission manner is a wireless transmission manner, the fourth transmission manner comprises at least one of: a PUSCH, a RACH, MAC signaling, RRC signaling, or node-specific signaling;
the access feedback information comprises at least one of:
a unique identifier or network index of a current wireless relay node;
a measured network topology-specific transmission delay or reception time;
a beam index corresponding to a received beam transmitted by the network device;
after determining or constructing the topology information of the regional wireless signal transmission network, the method further comprises:
transmitting a node identification instruction to a plurality of the wireless relay nodes according to the topology information to systematically index and manage corresponding wireless relay nodes; and
the node identification instruction comprises at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

8. The method of claim 1 or 2, wherein, the first interaction information is node state information;
the performing information interaction with a wireless relay node to obtain first interaction information comprises:
transmitting a second measurement signal to the wireless relay node and receiving the node state information fed back by the wireless relay node;
or
receiving the node state information proactively reported by the wireless relay node; and
correspondingly, the determining, constructing or maintaining topology information of the regional wireless signal transmission network according to the first interaction information comprises:
changing the topology information of the regional wireless signal transmission network according to the node state information.

9. The method of claim 8, wherein, transmitting a second measurement signal to the wireless relay node and receiving the node state information fed back by the wireless relay node comprises:
obtaining a measurement periodicity; transmitting the second measurement signal to the wireless relay node according to the measurement periodicity; and receiving the node state information fed back by the wireless relay node;
or
acquiring a topology change trigger signal; transmitting the second measurement signal to the wireless relay node according to the topology change trigger signal; and receiving the node state information fed back by the wireless relay node.

10. The method of claim 8, wherein, transmitting a second measurement signal to the wireless relay node and receiving the node state information fed back by the wireless relay node comprises:
transmitting the second measurement signal to a plurality of the wireless relay nodes through a fifth transmission manner; and
receiving the node state information from the wireless relay node through a sixth transmission manner;
correspondingly, the changing the topology information of the regional wireless signal transmission network according to the first interaction information comprises:
obtaining transmission delay information and corresponding beam information of a plurality of the wireless relay nodes according to the node state information;
determining the association information of a plurality of the wireless relay nodes according to the transmission delay information and the beam information; and
changing the topology information of the regional wireless signal transmission network according to the association information.

11. The method of claim 10, wherein, the fifth transmission manner comprises at least one of:
an SSB channel, a CSI-RS channel, MAC signaling, RRC signaling, paging signaling, or node-specific signaling;
the second measurement signal comprises a beam index corresponding to the beam transmitted by the network device;
the sixth transmission manner is a wired transmission manner or a wireless transmission manner;
in the case where the sixth transmission manner is a wireless transmission manner, the sixth transmission manner comprises at least one of: a PUSCH, a RACH, MAC signaling, RRC signaling, or node-specific signaling;
the node state information comprises at least one of:
a unique identifier or network index of a current wireless relay node;
a measured network topology-specific transmission delay or reception time; or
a beam index corresponding to a received beam transmitted by the network device.

12. The method of claim 8, wherein the node state information comprises a network exited status or a network joined status; and
correspondingly, the changing the topology information of the regional wireless signal transmission network according to the first interaction information comprises:
in response to the node state information being the network exited status, deleting the corresponding wireless relay node from the topology information of the regional wireless signal transmission network and reconstructing the topology information of the regional wireless signal transmission network; and
in response to the node state information being the network joined status, adding the corresponding wireless relay node to the topology information of the regional wireless signal transmission network and reconstructing the topology information of the regional wireless signal transmission network.

13. The method of any one of claims 8 to 12, wherein, after changing the topology information of the regional wireless signal transmission network, the method further comprises:
transmitting a node identification instruction to a plurality of the wireless relay nodes according to the changed topology information of the regional wireless signal transmission network to systematically index and manage corresponding wireless relay nodes; and
the node identification instruction comprises at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

14. The method of claim 1 or 2, wherein the first interaction information is operation effectiveness information;
the performing information interaction with a wireless relay node to obtain first interaction information comprises:
acquiring current topology information of the regional wireless signal transmission network;
obtaining, according to the topology information, first beam information corresponding to a wireless relay node to be operated;
transmitting a codebook control instruction to the wireless relay node to be operated according to the first beam information through a seventh transmission manner; and
receiving the operation effectiveness information fed back from the wireless relay node;
correspondingly, the determining, constructing or maintaining topology information of the regional wireless signal transmission network according to the first interaction information comprises:
updating the topology information of the regional wireless signal transmission network according to the operation effectiveness information.

15. The method of claim 14, wherein, the seventh transmission manner comprises at least one of:
an SSB channel, a CSI-RS channel, MAC signaling, RRC signaling, paging signaling, or node-specific signaling;
the codebook control instruction comprises at least one of:
a network index of the wireless relay node to be operated;
an indicator that indicates whether the wireless relay node to be operated turns on beam sweeping;
beam information expected to be configured by the wireless relay node to be operated; or
an operation instruction for the wireless relay node to be operated; and
the operation instruction comprises at least one of: on/off control, power control, or panel mechanics adjustment.

16. The method of any one of claims 1, 2, 4, 5, 6, 7, 9, 10, 11, 12, and 15, wherein the regional wireless signal transmission network is a signal transmission network with a tree topology structure or a signal transmission network with a mesh topology structure; and the wireless relay node is a reconfigurable intelligent surface (RIS) node or a smart repeater (SR) node.

17. An information interaction method, applied to a wireless relay node, wherein,
the wireless relay node, together with a network device and at least one further wireless relay node, is arranged to form a regional wireless signal transmission network which isa multi-hop mobile communication network;
the method comprising:
performing information interaction with the network device to enable the network device to determine, construct or maintain topology information of the regional wireless signal transmission network according to interaction information;
wherein the wireless relay node performs information interaction directly with the network device, or the wireless relay node performs information interaction with the network device through another wireless relay node.

18. The method of claim 17, wherein the topology information comprises at least one of:
an area index of the wireless relay node, a previous-hop node of the wireless relay node, a next-hop node of the wireless relay node, beam information corresponding to the wireless relay node, or beam information corresponding to a path leading to the wireless relay node.

19. The method of claim 17 or 18, wherein
performing information interaction with the network device to enable the network device to determine, construct or maintain topology information of the regional wireless signal transmission network according to interaction information comprises:
receiving a network access control signal or a first measurement signal from the network device;
generating access feedback information according to the network access control signal or the first measurement signal; and
transmitting the access feedback information to the network device to enable the network device to determine or construct the topology information of the regional wireless signal transmission network according to the interaction information.

20. The method of claim 19, wherein,
receiving a network access control signal from the network device comprises:
receiving the network access control signal from the network device through a first transmission manner;
generating access feedback information according to the network access control signal or the first measurement signal comprises:
searching for pre-stored a priori information according to the network access control signal to obtain association information of the current wireless relay node in the regional wireless signal transmission network; and
generating the access feedback information according to the association information; and
transmitting the access feedback information to the network device comprises:
transmitting the access feedback information to the network device through a second transmission manner.

21. The method of claim 20, wherein
the first transmission manner comprises at least one of: a synchronization signal block (SSB) channel, a channel state information reference signal (CSI-RS) channel, media access control (MAC) signaling, radio resource control (RRC) signaling, paging signaling, or node-specific signaling;
the network access control signal comprises at least one of:
a node signaling indicator for identifying the signal as the network access control signal;
a signal control type;
an index of a target wireless relay node for causing only the target wireless relay node to parse the network access control signal;
a broadcast signaling indicator for causing unspecified wireless relay nodes to parse the network access control signal;
signaling content;
current beam information for linking and information synchronization of a wireless relay node with the current beam information; or
an identifier of the regional wireless signal transmission network; and
the signal control type comprises at least one of:
on/off control, beam selection control, or power control; and
the second transmission manner is a wired transmission manner or a wireless transmission manner; in the case where the second transmission manner is a wireless transmission manner, the second transmission manner comprises at least one of: a physical uplink shared channel (PUSCH), a random access channel (RACH), MAC signaling, RRC signaling, or node-specific signaling;
the access feedback information comprises at least one of:
a node depth of a current wireless relay node in the regional wireless signal transmission network;
a count of next-hop wireless relay nodes of a current wireless relay node;
a network index or unique identifier of a next-hop wireless relay node of a current wireless relay node;
beam information of a current wireless relay node corresponding to each next-hop wireless relay node of the current wireless relay node;
a network index or unique identifier of a previous-hop wireless relay node of a current wireless relay node;
a node type of a next-hop wireless relay node of a current wireless relay node;
a node type of a previous-hop wireless relay node of a current wireless relay node;
a working state of a next-hop wireless relay node of a current wireless relay node;
a working state of a previous-hop wireless relay node of a current wireless relay node;
an activation state of a next-hop wireless relay node of a current wireless relay node;
an activation state of a previous-hop wireless relay node of a current wireless relay node;
configuration information of a next-hop wireless relay node of a current wireless relay node;
configuration information of a previous-hop wireless relay node of a current wireless relay node;
deployment information of next-hop wireless relay nodes of a current wireless relay node;
deployment information of a previous-hop wireless relay node of a current wireless relay node;
performance information of a next-hop wireless relay node of a current wireless relay node; or
performance information of a previous-hop wireless relay node of a current wireless relay node;
the node type comprises at least one of: a static codebook node, a semi-static codebook node, or a dynamic codebook node;
the working state comprises at least one of: an on/off status or a beam codebook index;
the activation state comprises at least one of: a reflection status or a transmission status; the configuration information comprises at least one of: horizontal and vertical element counts, a configured polarization count, a bit count, or panel area;
the deployment information comprises at least one of: a deployment height, deployment coordinates, an elevation angle, an azimuth angle, or a rotation angle of panel relative to the normal; and
the performance information comprises at least one of: a time interval for codebook switching, a time delay for a codebook to come into effect, or a maximum number of stored codebooks.

22. The method of claim 19, wherein, performing information interaction with the network device comprises:
receiving the first measurement signal from the network device through a third transmission manner;
generating access feedback information according to the first measurement signal, wherein the access feedback information comprises transmission delay information and beam information corresponding to the first measurement signal; and
transmitting the access feedback information to the network device through a fourth transmission manner.

23. The method of claim 22, wherein the third transmission manner comprises at least one of:
an SSB channel, a CSI-RS channel, MAC signaling, RRC signaling, paging signaling, or node-specific signaling;
the first measurement signal comprises a beam index corresponding to the beam transmitted by the network device;
the fourth transmission manner is a wired transmission manner or a wireless transmission manner;
in the case where the fourth transmission manner is a wireless transmission manner, the fourth transmission manner comprises at least one of: a PUSCH, a RACH, MAC signaling, RRC signaling, or node-specific signaling;
the access feedback information comprises at least one of:
a unique identifier or network index of a current wireless relay node;
a measured network topology-specific transmission delay or reception time; or
a beam index corresponding to a received beam transmitted by the network device; and the method further comprises:
receiving a node identification instruction from the network device, wherein the node identification instruction is generated by the network device according to the topology information; and
acquiring network information corresponding to the current wireless relay node according to the node identification instruction; and
the node identification instruction comprises at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

24. The method of claim 17 or 18, wherein
performing information interaction with the network device to enable the network device to determine, construct or maintain topology information of the regional wireless signal transmission network according to interaction information comprises:
receiving a second measurement signal from the network device, generating node state information according to the second measurement signal, and transmitting the node state information to the network device to enable the network device to change the topology information of the regional wireless signal transmission network according to the interaction information;
or
acquiring state change information of the current wireless relay node, generating node state information according to the state change information, and reporting the node state information to the network device to enable the network device to change the topology information of the regional wireless signal transmission network according to the interaction information.

25. The method of claim 24, wherein,
receiving a second measurement signal from the network device, generating node state information according to the second measurement signal, and transmitting the node state information to the network device comprises:
receiving the second measurement signal from the network device through a fifth transmission manner;
generating the node state information according to the second measurement signal, wherein the node state information comprises transmission delay information and beam information corresponding to the second measurement signal; and
transmitting the node state information to the network device through a sixth transmission manner.

26. The method of claim 25, wherein the fifth transmission manner comprises at least one of:
an SSB channel, a CSI-RS channel, MAC signaling, RRC signaling, paging signaling, or node-specific signaling;
the second measurement signal comprises a beam index corresponding to the beam transmitted by the network device;
the sixth transmission manner is a wired transmission manner or a wireless transmission manner;
in the case where the sixth transmission manner is a wireless transmission manner, the sixth transmission manner comprises at least one of: a PUSCH, a RACH, MAC signaling, RRC signaling, or node-specific signaling;
the node state information comprises at least one of:
a unique identifier or network index of a current wireless relay node;
a measured network topology-specific transmission delay or reception time; or
a beam index corresponding to a received beam transmitted by the network device.

27. The method of claim 24, wherein the node state information comprises a network exited status or a network joined status; and
correspondingly, the changing the topology information of the regional wireless signal transmission network according to the interaction information comprises:
in response to the node state information being the network exited status, deleting the corresponding wireless relay node from the topology information of the regional wireless signal transmission network and reconstructing the topology information of the regional wireless signal transmission network; and
in response to the node state information being the network joined status, adding the corresponding wireless relay node to the topology information of the regional wireless signal transmission network and reconstructing the topology information of the regional wireless signal transmission network.

28. The method of any one of claims 24 to 27, further comprising:
receiving a node identification instruction from the network device, wherein the node identification instruction is generated by the network device according to the changed topology information; and
acquiring network information corresponding to the current wireless relay node according to the node identification instruction; wherein,
the node identification instruction comprises at least one of:
a unique identifier (ID) of a target wireless relay node;
a network index of a target wireless relay node in the regional wireless signal transmission network;
a network index of a previous-hop wireless relay node of a target wireless relay node;
a number of next-hop wireless relay nodes of a target wireless relay node and corresponding network indexes of the next-hop wireless relay nodes; or
beam information corresponding to each next-hop wireless relay node of a target wireless relay node.

29. The method of claim 17 or 18, wherein,
performing information interaction with the network device comprises:
receiving a codebook control instruction from the network device through a seventh transmission manner, wherein the codebook control instruction is transmitted by the network device according to the current topology information of the regional wireless signal transmission network;
parsing the codebook control instruction and executing corresponding operation; and
generating operation effectiveness information and transmitting the operation effectiveness information to the network device.

30. The method of claim 29, wherein the seventh transmission manner comprises at least one of:
an SSB channel, a CSI-RS channel, MAC signaling, RRC signaling, paging signaling, or node-specific signaling;
the codebook control instruction comprises at least one of:
a network index of the wireless relay node to be operated;
an indicator that indicates whether the wireless relay node to be operated turns on beam sweeping;
beam information expected to be configured by the wireless relay node to be operated; or
an operation instruction for the wireless relay node to be operated; and
the operation instruction comprises at least one of: on/off control, power control, or panel mechanics adjustment.

31. The method of any one of claims 17, 18, 20, 21, 22, 23, 25, 26, 27, and 30, wherein the regional wireless signal transmission network is a signal transmission network with a tree topology structure or a signal transmission network with a mesh topology structure; and the wireless relay node is a reconfigurable intelligent surface (RIS) node or a smart repeater (SR) node.

32. An information interaction method, applied to a communication system, wherein, the communication system comprising a regional wireless signal transmission network composed of a network device and a plurality of wireless relay nodes, and the method comprises:
performing, by the network device, the information interaction method of any one of claims 1 to 16; and
correspondingly,
performing, by the wireless relay nodes, the information interaction method of any one of claims 17 to 31.

33. A network device, comprising a first memory, a first processor, and a computer program stored in the first memory and executable by the first processor, wherein, the computer program, when executed by the first processor, causes the first processor to carry out the information interaction method of any one of claims 1 to 16.

34. A wireless relay node, comprising a second memory, a second processor, and a computer program stored in the second memory and executable by the processor, wherein, the computer program, when executed by the processor, causes the processor to carry out the information interaction method of any one of claims 17 to 31.

35. A computer-readable storage medium storing computer-executable instructions, wherein, the computer-executable instructions are configured to carry out:
the information interaction method of any one of claims 1 to 16;
or
the information interaction method of any one of claims 17 to 31.
